**Europäisches Patentamt**

**European Patent Office**

**Office européen des brevets**

(19)

(11) Veröffentlichungsnummer: **0 221 353**
**B1**

(12) # EUROPÄISCHE PATENTSCHRIFT

(45) Veröffentlichungstag der Patentschrift:
**17.11.88**

(21) Anmeldenummer: **86113608.3**

(22) Anmeldetag: **02.10.86**

(51) Int. Cl.⁴: **B 60 K 28/16**

(54) **Vorrichtung zur Drehmomentreduzierung von luftverdichtenden Einspritz-Brennkraftmaschinen in Fahrzeugen mit einer Antriebsschlupfregelung.**

(30) Priorität: **04.10.85 DE 3535486**

(43) Veröffentlichungstag der Anmeldung:
**13.05.87 Patentblatt 87/20**

(45) Bekanntmachung des Hinweises auf die Patenterteilung:
**17.11.88 Patentblatt 88/46**

(84) Benannte Vertragsstaaten:
**AT CH FR GB IT LI SE**

(56) Entgegenhaltungen:
**DE - A - 3 337 664**
**DE - A - 3 344 819**

(73) Patentinhaber: **Daimler-Benz Aktiengesellschaft,**
**Postfach 600202 Mercedesstrasse 136,**
**D-7000 Stuttgart 60 (DE)**

(72) Erfinder: **Hofer, Hermann, Dipl.-Ing., Goethestrasse 27,**
**D-7560 Gaggenau (DE)**

EP 0 221 353 B1

## Beschreibung

Die Erfindung bezieht sich auf eine Vorrichtung zur Drehmomentreduzierung von luftverdichtenden Einspritz-Brennkraftmaschinen in Fahrzeugen mit einer Antriebsschlupfregelung nach dem Oberbegriff des Patentanspruchs 1. Dabei handelt es sich um allgemein bekannte Nutzfahrzeuge mit Dieselmotoren und Motorbremse.

Gerade für Fahrzeuge dieser Grössenordnung sind Bremsschlupfregelung und Antriebsschlupfregelung von besonderer Bedeutung.

Im Gegensatz zur Bremsschlupfregelung wirkt die Antriebsschlupfregelung nicht nur auf die Radbremsen der schlupfbehafteten Räder, sondern unter bestimmten Bedingungen auch im Sinne einer Drehmomentreduzierung auf die Einspritzpumpe der Brennkraftmaschine.

Fast alle grösseren Nutzfahrzeuge sind mit einer Motorbremse ausgerüstet, bei deren Betätigung Druck aus einem Druckspeicher über ein vom Fahrer betätigtes Motorbremsventil auf Arbeitszylinder für die Motorbremsklappenbetätigung geleitet wird, wodurch die Abgaskanäle mehr oder weniger verschlossen werden und gleichzeitig ebenfalls über das Motorbremsventil ein Regulierzylinder mit Druck beaufschlagt wird, wodurch der Reglerhebel der Einspritzpumpe in Stoppstellung gebracht wird. Der Motor wird nun vom Fahrzeug angetrieben und durch die Kompression von Luft in den Zylindern abgebremst.

Bei Drehmomentreduzierung infolge Antriebsschlupfs darf der Motor jedoch nicht abgestellt werden, da er sonst sofort stehenbleibt und mit ihm das Fahrzeug.

Es ist Aufgabe der Erfindung, eine Vorrichtung zur Drehmomentreduzierung von luftverdichtenden Einspritz-Brennkraftmaschinen für die Antriebsschlupfregelung zu schaffen, die durch möglichst einfachen Aufbau einen sicheren und störungsfreien Betrieb ermöglicht.

Diese Aufgabe wird erfindungsgemäss durch die im Kennzeichen des Patentanspruchs angegebenen Merkmale gelöst.

Ein Vorteil der Erfindung besteht darin, dass sich die Vorrichtung dem bereits vorhandenen System der hydraulischen oder pneumatischen Bremsanlage anpasst und infolgedessen den Druckspeicher und den Regulierzylinder, die bereits vorhanden sind, mitbenutzen kann, wodurch sich die Kosten wesentlich reduzieren. Der einfache Aufbau mit nur wenigen zusätzlichen Elementen gewährleistet einen reibungslosen und störungsfreien Betrieb.

Weitere Einzelheiten der Erfindung werden im folgenden anhand von in der Zeichnung dargestellten Ausführungsbeispielen beschrieben. Es zeigen:

Fig. 1 ein erstes Ausführungsbeispiel,
Fig. 2 ein zweites Ausführungsbeispiel, und
Fig. 3 ein drittes Ausführungsbeispiel gemäss der Erfindung in schematischer Darstellung.

Die Ausführungsbeispiele beziehen sich auf ein Kraftfahrzeug mit einer luftverdichtenden Brennkraftmaschine mit einer Einspritzpumpe, mit einer Druckluft-Bremsanlage und mit einer ebenfalls druckluftbetätigten Motorbremse sowie mit einer Antriebsschlupfregelung. In den Figuren schematisch dargestellt ist ein Druckspeicher 1, der in bekannter, nicht dargestellter Weise aufgeladen werden kann. Dieser Speicher 1 ist über ein hand- oder fussbetätigtes Motorbremsventil 2, ausgeführt als 3/2-Wegeventil, mit Arbeitszylindern 5 für die Betätigung der Motorbremse und gleichzeitig mit einem Regulierzylinder 6, der auf den Reglerhebel 8 einer nicht dargestellten Einspritzpumpe der Brennkraftmaschine einwirkt, verbunden.

Das Motorbremsventil 2 sperrt in seiner Ruhelage den Druckspeicher 1 und entlüftet gleichzeitig die Arbeitszylinder 5 und den Regulierzylinder 6. In seiner Arbeitsstellung verbindet es den Druckspeicher 1 mit den Arbeitszylindern 5 und dem Regulierzylinder 6, die daraufhin ebenfalls in ihre Arbeitsstellung überwechseln, wodurch die Motorbremse in Betrieb geht. Der Regulierzylinder 6 besteht aus einem einfach wirkenden Kolbenzylinder, dessen Kolben 6a bei Druckeinwirkung gegen die Kraft einer Rückstellfeder 6b verschiebbar ist. Aus der teleskopisch ausgebildeten, mit dem Kolben verbundenen Kolbenstange 6c ist gegen die Kraft einer Feder 6d eine Zugstange 6e herausziehbar, die mit dem Reglerhebel 8 gelenkig verbunden ist. Bei Motorbremsbetrieb wird der Reglerhebel der Einspritzpumpe von dem druckbeaufschlagten Regulierzylinder in die Stoppstellung verbracht, wodurch die Kraftstoffeinspritzung in die Motorzylinder unterbunden wird.

Tritt bei den angetriebenen Rädern Antriebsschlupf auf, so wird zunächst an den Rad- bzw. Antriebsachsbremszylindern Bremsdruck eingesteuert. Wenn die Räder anschliessend noch durchdrehen, so wird von der nicht dargestellten Antriebsschlupfregelung ein Signal zum Reduzieren des Motordrehmoments abgegeben. Diese Reduzierung erfolgt erfindungsgemäss mittels des vorhandenen Regulierzylinders 6 über die Einspritzpumpe.

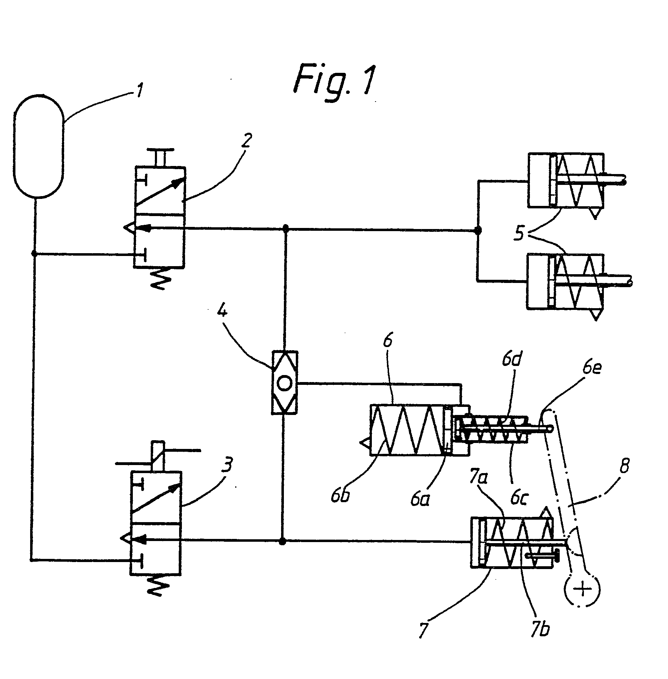

Zu diesem Zweck ist gemäss Fig. 1 parallel zum Motorbremsventil 2 ein im Aufbau mit diesem identisches, aber elektromagnetisch vom Signal der Antriebsschlupfregelung angesteuertes 3/2-Wegeventil 3 angeordnet, welches zwischen dem Druckspeicher 1 und einem einfach wirkenden Kolbenzylinder 7 liegt. Dieser Kolbenzylinder 7 steht mit dem Reglerhebel 8 derart in Verbindung, dass er bzw. die Kolbenstange 7b in Ruhestellung, die durch eine Rückstellfeder 7a festgelegt wird, den Reglerhebel 8 in keiner Stellung, die dieser einnehmen kann, berührt, dass er aber in Arbeitsstellung, die die andere Endstellung des Kolbens ist, den Reglerhebel 8 in seiner Bewegungsfähigkeit dahingehend einschränkt, dass sich dieser nur noch zwischen einer etwa der Kaltstart-Leerlaufstellung entsprechenden Stellung und der Vollaststellung bewegen kann.

Um zu verhindern, dass der Kolbenzylinder beim Betätigen der Motorbremse und umgekehrt die Arbeitszylinder der Motorbremse bei der Drehmomentreduzierung durch die Antriebsschlupfregelung mit Druck beaufschlagt werden, ist ein Wechselventil 4 mit Rückströmung vorgesehen, welches auf den Regulierzylinder 6 wirkt und sowohl vom Motorbremsventil 2 als auch vom 3/2-Wegeventil 3 her mit Druck beaufschlagbar ist. Anstelle des Wechselventils kann in an sich bekannter Weise auch ein synchron mit dem Motorbremsventil oder dem 3/2-Wegeventil gesteuertes Wegeventil vorgesehen sein.

Die Wirkungsweise der vorbeschriebenen Anordnung ist folgende: bei der bereits beschriebenen Motorbremsenbetätigung gelangt der Druck vom Druckspeicher 1 über das Motorbremsventil 2 zu den Arbeitszylindern 5 und über das Wechselventil 4 zum Regulierzylinder 6. Ein Druckaufbau im Kolbenzylinder 7 wird durch das Wechselventil 4 verhindert. Der Druckabbau nach Beendigung des Motorbremsens erfolgt über die Ruhestellung des Motorbremsventils.

Ist im Verlauf der Antriebsschlupfregelung eine Reduzierung des Motordrehmoments erforderlich, so wird vom entsprechenden Signal das 3/2-Wegeventil 3 in seine Arbeitsstellung überführt, worauf Druck an den Kolbenzylinder 7 und über das Wechselventil 4 zum Regulierzylinder 6 gelangt. Ein Druckaufbau in den Arbeitszylindern 5 der Motorbremse wird durch das Wechselventil 4 verhindert. Infolge des Druckaufbaus geht der Kolbenzylinder 7 in Arbeitsstellung, d. h., die Kolbenstange 7b bildet einen Anschlag für den Reglerhebel 8, der gleichzeitig durch den druckbeaufschlagten Regulierzylinder 6 in Richtung auf die Stoppstellung gezogen wird. Der Reglerhebel 8 folgt aber nur so lange, bis er an der Kolbenstange 7b anstösst. Die weitere Bewegung des Kolbens 6a erfolgt gegen die Kraft der Feder 6d, ohne den Reglerhebel noch weiter zu bewegen. Damit ist sichergestellt, dass der Motor weiterläuft, das Drehmoment aber reduziert wird. Auch hier findet die Entlüftung nach Ende des Vorganges über die Ruhestellung des 3/2-Wegeventils 3 statt.

Anstelle einer festgelegten Endstellung der Kolbenstange 7b kann auch ein motortemperaturabhängiger Anschlag – z. B. ein Dehnstoffelement – vorgesehen sein, so dass die Drehmomentreduzierung bei betriebswarmem Motor noch weiter nach unten erfolgen kann.

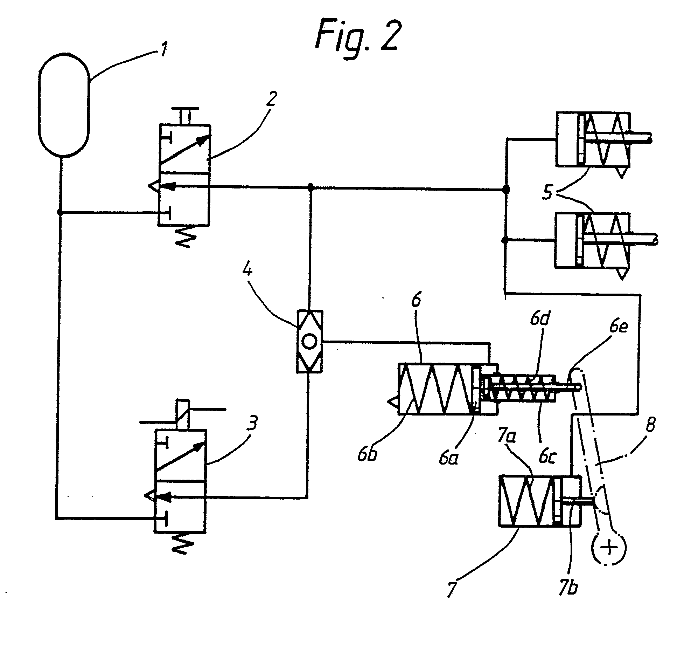

Auch beim Ausführungsbeispiel nach Fig. 2 ist parallel zum Motorbremsventil 2 ein im Aufbau mit diesem identisches, aber elektromagnetisch vom Signal der Antriebsschlupfregelung angesteuertes 3/2-Wegeventil 3 angeordnet, dessen Ausgang jedoch nur mit dem Wechselventil 4 verbunden ist und nicht – wie in Fig. 1 – auch noch mit dem Kolbenzylinder 7. Dieser ist bei diesem Ausführungsbeispiel nunmehr an den Ausgang des Motorbremsventils 2 angeschlossen, welches den Kolbenzylinder 7 in seiner Ruhestellung entlüftet, so dass sich die Kolbenstange 7b durch die Rückstellfeder 7a in ihre ausgefahrene, einen Anschlag bildende Stellung bewegt und in seiner Arbeitsstellung mit dem Druckspeicher 1 verbindet, so dass sich die Kolbenstange 7b entgegen der Kraft der Rückstellfeder 7a in ihre zurückgezogene Stellung bewegt. Diese Stellung nimmt also die Kolbenstange 7b bei einer Motorbremsenbetätigung mittels des Motorbremsventils 2 ein, so dass über den druckbeaufschlagten Regulierzylinder 6 der Reglerhebel 8 bis in die Stoppstellung gezogen werden kann, da er durch die Kolbenstange 7b nicht gehindert wird. Sobald jedoch die Motorbremsenbetätigung beendet wird, werden sowohl die Zylinder 5 und 6 als auch der Kolbenzylinder 7 über das Motorbremsventil 2 entlüftet, worauf sich die Kolbenstange 7b aufgrund der Rückstellfeder 7a wieder in ihre ausgefahrene Stellung bewegt.

Ist nun im Verlauf der Antriebsschlupfregelung eine Reduzierung des Motordrehmoments erforderlich, so wird vom entsprechenden Signal das 3/2-Wegeventil 3 in seine Arbeitsstellung überführt, worauf Druck über das Wechselventil 4 zum Regulierzylinder 6 gelangt. Auch hierbei wird ein Druckaufbau in den Arbeitszylindern 5 der Motorbremse durch das Wechselventil 4 verhindert. Durch den druckbeaufschlagten Regulierzylinder 6 wird der Reglerhebel 8 in Richtung auf die Stoppstellung gezogen, aber nur so weit, bis er an der ausgefahrenen, einen Anschlag bildenden Kolbenstange 7b anstösst. Die weitere Bewegung des Kolbens 6a erfolgt gegen die Kraft der Feder 6d, ohne den Reglerhebel 8 noch weiter zu bewegen. Somit ist auch hier sichergestellt, dass der Motor weiterläuft, das Drehmoment aber reduziert wird. Nach Beendigung des Vorganges findet die Entlüftung des Regulierzylinders 6 über die Ruhestellung des 3/2-Wegeventils 3 statt.

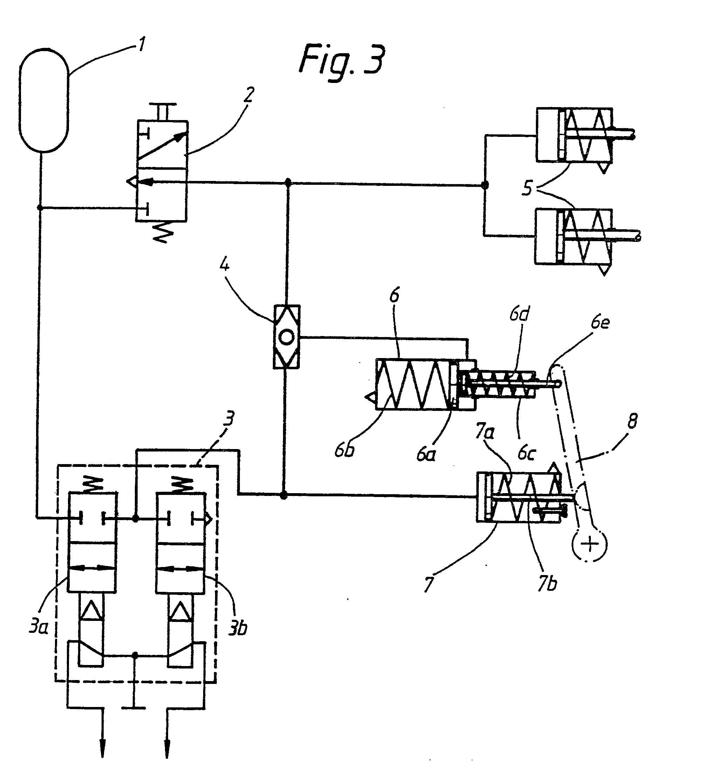

Fig. 3 unterscheidet sich von Fig. 1 dadurch, dass das in Fig. 1 verwendete 3/2-Wegeventil 3 durch ein bereits in ABS-Bremsanlagen verwendetes Wegeventil 3 ersetzt ist. Hierbei ist der Kolbenzylinder 7 an den Ausgang des Ventils 3a und den Eingang des Ventils 3b des Wegeventils 3 angeschlossen, wobei beide Ventile von den Signalen der Antriebsschlupfregelung schaltbar sind. Ist im Verlauf der Antriebsschlupfregelung eine Reduzierung des Motordrehmoments erforderlich, so wird während des Regelzyklus das Ventil 3a in seine Arbeitsstellung angesteuert. Dadurch werden vom Druckspeicher 1 sowohl der Kolbenzylinder 7 als auch über das Wechselventil 4 der Regulierzylinder 6 mit Druck beaufschlagt und – wie in Fig. 1 beschrieben – der Motor zurückgeregelt und zwar maximal so weit, bis der Reglerhebel 8 an der ausgefahrenen, einen Anschlag bildenden Kolbenstange 7b anschlägt. Dieser Zurückregelvorgang dauert so lange an, bis über Signale der Antriebsschlupfregelung – aufgrund der augenblicklichen Traktions- und Motordrehmomentsituation – das Ventil 3a wieder gesperrt wird, also in seine Ruhelage zurückkehrt, wodurch die Druckverbindung unterbrochen wird. Da eine Entlüftung der Zylinder 6, 7 hierbei nicht stattfindet, wird ein Regelzustand – zugeordnet zum Radschlupf – gehalten und erst bei möglicher höherer Vortriebskraft die normale Motorregelung wieder hergestellt, indem über die Signale der Antriebsschlupfregelung nunmehr das Ventil 3b angesteuert wird, welches in Abhängigkeit von den Signalen in seiner Arbeitsstellung die Zylinder 6 und 7 auf einmal oder getaktet entlüftet. Sodann ist der Regelzyklus abgeschlossen.

Dieses in Figur 3 dargestellte Wegeventil 3 kann natürlich auch beim Ausführungsbeispiel nach Figur 2 anstatt des dort verwendeten 3/2-Wegeventils 3 eingesetzt werden.

## Patentansprüche

1. Vorrichtung zur Drehmomentreduzierung von luftverdichtenden Einspritz-Brennkraftmaschinen in Kraftfahrzeugen mit einer Antriebsschlupfregelung, mit einer mittels eines in einem Druckspeicher befindlichen Druckmediums über ein Motorbremsventil betätigbaren Motorbremse und mit einem ebenfalls über das Motorbremsventil betätigbaren, auf den Reglerhebel der Einspritzpumpe im Sinne eines Abstellens der Brennkraftmaschine einwirkenden Regulierzylinder, dadurch gekennzeichnet,
— dass ein einfach wirkender, vom Druckmedium des Druckspeichers (1) gegen die Kraft einer Rückstellfeder (7a) beaufschlagbarer Kolbenzylinder (7) mit einer Kolbenstange (7b) vorgesehen ist, welche in der ausgefahrenen Stellung einen zwischen Leerlaufstellung und Vollaststellung der Einspritzpumpe im Sinne einer Leerlaufbegrenzung wirkenden Anschlag für den Reglerhebel (8) bildet und in ihrer zurückgezogenen Stellung diesen nicht behindert,
— dass an den Druckspeicher (1) und parallel zu dem Motorbremsventil (2) des weiteren ein von Signalen der Antriebsschlupfregelung schaltbares Wegeventil (3) angeschlossen ist, wobei der Kolbenzylinder (7) mit dem Ausgang eines dieser Ventile (2; 3) verbunden ist,
— und dass ein sowohl über das Motorbremsventil (2) als auch über das Wegeventil (3) beaufschlagbares, auf den Regulierzylinder (6) wirkendes Wechselventil (4) mit Rückströmung vorgesehen ist.

2. Vorrichtung nach Anspruch 1, dadurch gekennzeichnet, dass der Kolbenzylinder (7) an den Ausgang des Wegeventils (3) angeschlossen ist, welches den Kolbenzylinder (7) in seiner Ruhestellung entlüftet, so dass sich die Kolbenstange (7b) durch die Rückstellfeder (7a) in ihrer zurückgezogenen Stellung befindet, und in seiner Arbeitsstellung mit dem Druckspeicher (1) verbindet, so dass sich die Kolbenstange (7b) entgegen der Kraft der Rückstellfeder (7a) in ihre ausgefahrene Stellung bewegt (Fig. 1).

3. Vorrichtung nach Anspruch 1, dadurch gekennzeichnet, dass der Kolbenzylinder (7) an den Ausgang des Motorbremsventils (2) angeschlossen ist, welches den Kolbenzylinder (7) in seiner Ruhestellung entlüftet, so dass sich die Kolbenstange (7b) durch die Rückstellfeder (7a) in ihrer ausgefahrenen Stellung befindet, und in seiner Arbeitsstellung mit dem Druckspeicher (1) verbindet, so dass sich die Kolbenstange (7b) entgegen der Kraft der Rückstellfeder (7a) in ihre zurückgezogene Stellung bewegt (Fig. 2).

4. Vorrichtung nach Anspruch 1, dadurch gekennzeichnet, dass das Wechselventil (4) als ein synchron von dem Ventil (2; 3) gesteuertes Wegeventil ausgebildet ist.

5. Vorrichtung nach Anspruch 1, dadurch gekennzeichnet, dass der Kolbenzylinder (7) an den Ausgang eines Ventils (3a) des Wegeventils (3) und an den Eingang eines weiteren, ebenfalls von den Signalen der Antriebsschlupfregelung schaltbaren Ventils (3b) des Wegeventils (3) angeschlossen ist, wobei das Ventil (3a) in seiner Arbeitsstellung den Kolbenzylinder (7) mit dem Druckspeicher (1) verbindet, so dass sich die Kolbenstange (7b) entgegen der Kraft der Rückstellfeder (7a) in ihre ausgefahrene Stellung bewegt, hingegen das Ventil (3b) in seiner Arbeitsstellung den Kolbenzylinder (7) entlüftet, so dass sich die Kolbenstange (7b) durch die Rückstellfeder (7a) in ihre zurückgezogene Stellung bewegt, wobei die Signale der Antriebsschlupfregelung nur entweder das Ventil (3a) oder das Ventil (3b) ansteuern (Fig. 3).

## Claims

1. A torque reduction device for air compressing injection internal combustion engines in motor vehicles with a drive slip controlling device, an engine brake actuatable by means of a pressure medium situated in a pressure store through an engine brake valve, and a regulation cylinder which can also be actuated through the engine brake valve and acts upon the regulating lever of the injection pump in the manner of a shutting off of the internal combustion engine, characterised in that
— a simply operating piston cylinder (7) which can be impinged by the pressure medium of the pressure store (1) against the force of a return spring (7a) is provided with a piston rod (7) which in extended position forms an abutment operating in the manner of an idle running limiter between the neutral position and the full load position of the injection pump for the regulating lever and does not impede the latter in its withdrawn position;
— on the pressure store (1) and parallel with the engine brake valve (2) a directional control valve (3) actuatable by signals from the drive slip control is further connected, the piston cylinder (7) being connected with the output of one of said valves (2; 3);
— and in that a shuttle valve (4) which can be impinged both through the engine brake valve (2) and through the directional control valve (3) and acts on the regulating cylinder (6) is provided with return flow.

2. A device according to Claim 1, characterised in that the piston cylinder (7) is connected to the exit of the directional control valve (3) which vents the piston cylinder in its rest position, so that the piston rod (7b) is situated in its withdrawn position by the action of the return spring (7a), and in its operating position connects with the pressure store (1), so that the piston rod (7b) moves into its extended position against the force of the return spring (7a) (Fig. 1).

3. A device according to Claim 1, characterised in that the piston cylinder (7) is connected to the exit of the engine brake valve (2) which vents the piston cylinder (7) in its rest position, so that the piston rod (7b) is situated in its extended position by the action of the return spring (7a), and in its operating position connects with the pressure store (1), so that the piston rod (7b) moves into its withdrawn position against the force of the return spring (7a) (Fig. 2).

4. A device according to Claim 1, characterised in that the shuttle valve (4) is constructed as a directional control valve controlled synchronously by the valve (2;3).

5. A device according to Claim 1, characterised in that the piston cylinder (7) is connected to the exit of a valve (3a) of the directional control valve (3) and at the entrance of a further valve (3b) of the directional control valve (3) also actuatable by the signals of the drive slip controlling device, the valve (3a) connecting in its operating position the piston cylinder (7) with the pressure store (1) so that the piston rod (7b) moves into its extended position against the force of the return spring (7a), while on the other hand the valve (3b) in its operating position vents the piston cylinder (7) so that the piston rod (7b) moves into its withdrawn position by the action of the return spring (7a), the signals of the drive slip control controlling only either valve (3a) or valve (3b) (Fig. 3).

## Revendications

1. Dispositif pour la régulation du couple des moteurs à combustion interne à injection et à compression de l'air, pour véhicules automobiles équipés d'une régulation antipatinage à l'entraînement, comportant un frein moteur qui peut être actionné par l'intermédiaire d'un fluide de pression contenu dans un accumulateur de pression, par l'intermédiaire d'une vanne de frein moteur, et un cylindre de régulation qui peut lui aussi être actionné par la vanne de frein moteur et qui agit sur le levier du régulateur de la pompe d'injection dans le sens tendant vers l'arrêt du moteur à combustion interne, caractérisé en ce qu'il est prévu un cylindre à piston (7) à simple effet, qui peut être sollicité par le fluide de pression de l'accumulateur de pression (1) à l'encontre de l'action d'un ressort de rappel (7a), muni d'une tige de piston (7b) qui, dans la position d'extension, forme une butée d'arrêt du levier du régulateur entre la position de ralenti et la position de pleine charge de la pompe d'injection, pour former une limite de ralenti, et qui n'arrête pas ce levier de régulateur dans sa position rétractée, en ce qu'à l'accumulateur de pression (1), et en parallèle à la vanne de frein moteur (2), est raccordée en outre une vanne de distribution (3) qui peut être commutée par des signaux de la régulation anti-patinage à l'entraînement, le cylindre à piston (7) étant relié à la sortie de l'une de ces vannes (2;3), et en ce qu'il est prévu un distributeur-navette (4) muni d'un retour, qui peut être chargé par l'intermédiaire de la vanne de frein moteur (2) aussi bien que par l'intermédiaire de la vanne de distribution (3), et qui agit sur le cylindre de régulation (6).

2. Dispositif selon la revendication 1, caractérisé en ce que le cylindre à piston (7) est raccordé à la sortie de la vanne de distribution (3), qui met le cylindre à piston (7) à l'échappement dans la position de repos, de sorte que la tige de piston (7b) se trouve alors dans sa position rétractée par le ressort de rappel (7a), tandis que, dans sa position de travail, cette vanne de distribution relie le cylindre à piston à l'accumulateur de pression (1), de sorte que la tige de piston (7b) prend sa position d'extension à l'encontre de la force du ressort de rappel (7a) (figure 1).

3. Dispositif selon la revendication 1, caractérisé en ce que le cylindre à piston (7) est raccordé à la sortie de la vanne de frein moteur (2) qui, dans sa position de repos, met le cylindre à piston (7) à l'échappement, de sorte que la tige de piston (7b) se trouve alors dans sa position d'extension sous l'action du ressort de rappel (7a), tandis que, dans sa position de travail, elle relie ce cylindre à piston à l'accumulateur de pression (1), de sorte que la tige de piston (7b) vient prendre sa position rétractée à l'encontre de la force du ressort de rappel (7a) (figure 2).

4. Dispositif selon la revendication 1, caractérisé en ce que le distributeur-navette (4) est constitué par une vanne de distribution commandée en synchronisme par la vanne (2;3).

5. Dispositif selon la revendication 1, caractérisé en ce que le cylindre à piston (7) est raccordé à la sortie d'une vanne (3a) de la vanne de distribution (3) et à l'entrée d'une autre vanne (3b) de la vanne de distribution (3), qui peut être également commutée par les signaux de la régulation anti-patinage à l'entraînement, dispositif dans lequel, dans sa position de travail, la vanne (3a) relie le cylindre à piston (7) à l'accumulateur de pression (1) de sorte que la tige de piston (7b) vient prendre sa position d'extension à l'encontre de la force du ressort de rappel (7a) tandis que, dans sa position de travail, la vanne (3b) met le cylindre à piston (7) à l'échappement, de sorte que la tige de piston (7b) est ramenée à sa position rétractée par le ressort de rappel (7a), les signaux émis par la régulation antipatinage à l'entraînement commandant soit uniquement la vanne (3a), soit uniquement la vanne (3b) (figure 3).

## Fig. 1

# Fig. 2

Fig. 3